(19) **Europäisches Patentamt / European Patent Office / Office européen des brevets**

(11) **EP 3 196 831 A1**

(12) **EUROPEAN PATENT APPLICATION**

(43) Date of publication:
**26.07.2017 Bulletin 2017/30**

(51) Int Cl.:
***G06Q 50/06*** *(2012.01)*

(21) Application number: **16160236.2**

(22) Date of filing: **14.03.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Wipro Limited**<br>**560 035 Karnataka (IN)**<br><br>(72) Inventors:<br>• **MANDAL, Subhasis**<br>  **560035 Karnataka (IN)**<br>• **MEGHANI, Ravi**<br>  **560037 Karnataka (IN)** |
| (30) Priority: **22.01.2016 IN 201641002445** | (74) Representative: **Finnegan Europe LLP**<br>**16 Old Bailey**<br>**London EC4M 7EG (GB)** |

(54) **METHODS AND SYSTEMS FOR MONITORING ENERGY CONSUMPTION OF ENERGY CONSUMING APPARATUSES**

(57) In one embodiment, a method of measuring energy consumption of energy consuming apparatuses is disclosed. The method includes filtering energy consumption data received from a plurality of energy consuming apparatuses based on constraints to generate filtered energy consumption data; creating a plurality of data profiles using the filtered energy consumption data based on profiling variables; identifying at least one energy consumption variable and at least one normalizing variable for the plurality of energy consuming apparatuses for a data profile in the plurality of data profiles; iteratively determining correlation between the at least one energy consumption variable and the at least one normalizing variable; and normalizing the at least one energy consumption variable using the at least one normalizing variables in response to determining the correlation to generate an energy consumption threshold for each of the at least one energy consumption variable.

200

FIG. 2

**Description**

Technical Field

This disclosure relates generally to instrumentation and more particularly, but without limitation, to methods and systems for measuring energy consumption of energy consuming apparatuses across distributed facilities.

Background

According to the International Energy Agency (IEA), world energy outlook report 2010, demand for energy in the world is expected to increase drastically in coming few decades. Whereas, sources and supply of conventional energy like electricity from utility companies is going to be limited. This may lead to a huge supply-demand gap in energy. Also, the energy needs to be efficiently used to reduce carbon footprint. One of the major challenges faced by large consumers of energy, for example, a distributed facility or a process plant is to reduce energy consumption without compromising on the quality of operating conditions and quality of services.

In conventional methods, energy consuming apparatuses are managed using methods for overall energy performance benchmarks. However, benchmarks for energy consuming apparatuses or energy consuming apparatus groups and system level benchmarks are not well established. As a result, deciding the right indicators of energy consumption performance of an energy consuming apparatus or energy consuming apparatus groups is a challenge. Moreover, as energy consuming apparatuses operate in response to loads and various other dependent variables, it becomes paramount to determine norms for taking these dependent variables into account while managing the energy consuming apparatuses.

SUMMARY

In one embodiment, a method of monitoring energy consumption of a plurality of energy consuming apparatuses is disclosed. The method includes filtering energy consumption data received from a plurality of energy consuming apparatuses based on constraints to generate filtered energy consuming apparatus data; creating a plurality of data profiles using the filtered energy consumption data based on profiling variables; identifying at least one energy consumption variable and at least one normalizing variable for the plurality of energy consuming apparatuses for a data profile in the plurality of data profiles; iteratively determining correlation between the at least one benchmarking variable and the at least one normalizing variable; and normalizing the at least one energy consumption variable using the at least one normalizing variables in response to determining the correlation to generate energy consumption thresholds for each of the at least one energy consumption variables. In another embodiment, a system for rationalizing a portfolio of energy consuming apparatuses is disclosed. The system includes at least one processors and a computer-readable medium. The computer-readable medium stores instructions that, when executed by the at least one processor, cause the at least one processor to perform operations that includes filtering energy consumption data received from a plurality of energy consuming apparatuses based on constraints to generate filtered energy consumption data; creating a plurality of data profiles using the filtered energy consumption data based on profiling variables; identifying at least one energy consumption variable and at least one normalizing variable for the plurality of energy consuming apparatuses for a data profile in the plurality of data profiles; iteratively determining correlation between the at least one energy consumption variable and the at least one normalizing variable; and normalizing the at least one energy consumption variable using the at least one normalizing variables in response to determining the correlation to generate energy consumption thresholds for each of the at least one energy consumption variable.

In yet another embodiment, a non-transitory computer-readable storage medium for rationalizing a portfolio of energy consuming apparatuses is disclosed, which when executed by a computing device, cause the computing device to: filter energy consumption data received from a plurality of energy consuming apparatuses based on constraints to generate filtered energy consumption data; create a plurality of data profiles using the filtered energy consumption data based on profiling variables; identify at least one energy consumption variable and at least one normalizing variable for the plurality of energy consuming apparatuses for a data profile in the plurality of data profiles; iteratively determine correlation between the at least one energy consumption variable and the at least one normalizing variable; and normalize the at least one energy consumption variable using the at least one normalizing variables in response to determining the correlation to generate energy consumption thresholds for each of the at least one energy consumption variable.

The term "energy consuming apparatus" may also be called an "asset" or "energy asset", and the terms can be used interchangeably. In addition, the term "monitoring energy consumption" may be referred to as "benchmarking", and these terms can be used interchangeably. Further, the terms "threshold" and "energy consumption threshold" may alternatively be referred to as a "benchmark", and the terms can be used interchangeably. Yet further, the term "benchmarking variable" may also be referred to as an "energy consumption variable", and the terms can be used interchangeably. Further still, the term "asset data" may also be referred to as "energy consumption data", and the terms can be used interchangeably.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 illustrates a block diagram of an exemplary computer system for implementing various embodiments.
FIG. 2 is a block diagram illustrating a system for monitoring energy consumption of energy consuming apparatuses, in accordance with an embodiment.
FIG. 3 illustrates a flowchart of a method for monitoring energy consumption of energy consuming apparatuses, in accordance with an embodiment.
FIG. 4 illustrates a flowchart of a method for monitoring energy consumption of energy consuming apparatuses, in accordance with another embodiment.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

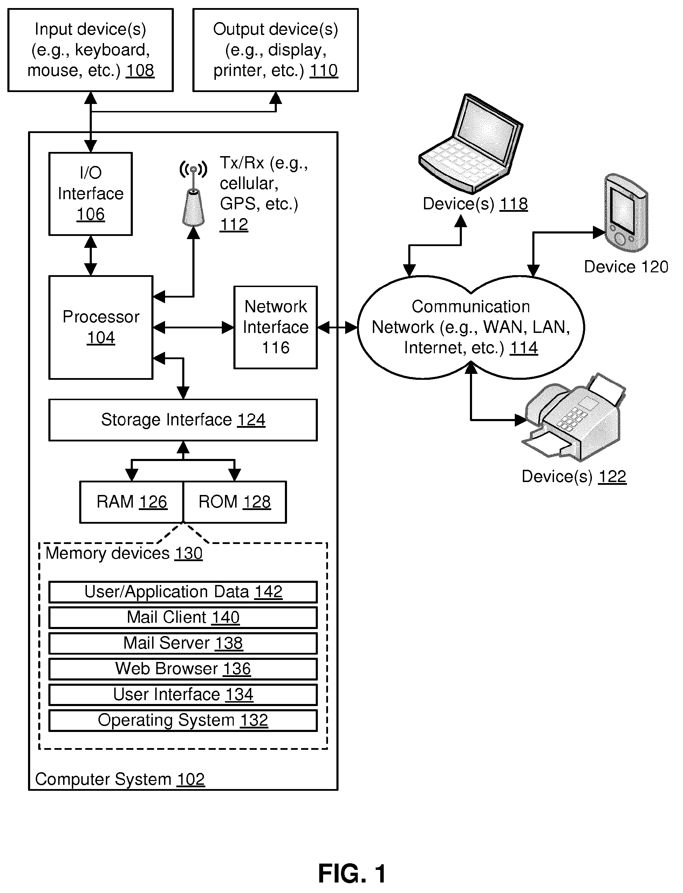

Additional illustrative embodiments are listed below. In one embodiment, a block diagram of an exemplary computer system for implementing various embodiments is disclosed in FIG. 1. Computer system 102 may comprise a central processing unit ("CPU" or "processor") 104. Processor 104 may comprise at least one data processor for executing program components for executing user-or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. Processor 104 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 104 may be disposed in communication with one or more input/output (I/O) devices via an I/O interface 106. I/O interface 106 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 106, computer system 102 may communicate with one or more I/O devices. For example, an input device 108 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 110 may be a printer, fax machine, video display (e.g., cathode ray tube (CRT), liquid crystal display (LCD), light-emitting diode (LED), plasma, or the like), audio speaker, etc. In some embodiments, a transceiver 112 may be disposed in connection with processor 104. Transceiver 112 may facilitate various types of wireless transmission or reception. For example, transceiver 112 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 104 may be disposed in communication with a communication network 114 via a network interface 116. Network interface 116 may communicate with communication network 114. Network interface 116 may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. Communication network 114 may include, without limitation, a direct interconnection, local area network (LAN), wide area network (WAN), wireless network (e.g., using Wireless Application Protocol), the Internet, etc. Using network interface 116 and communication network 114, computer system 102 may communicate with devices 118, 120, and 122. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, computer system 102 may itself embody one or more of these devices.

In some embodiments, processor 104 may be disposed in communication with one or more memory devices (e.g., RAM 126, ROM 128, etc.) via a storage interface 124. Storage interface 124 may connect to memory devices 130 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 130 may store a collection of program or database components, including, without limitation, an operating system 132, a user interface application 134, a web browser 136, a mail server 138, a mail client 140, a user/application data 142 (e.g., any data variables or data records discussed in this disclosure), etc. Operating system 132 may facilitate resource management and operation of the computer system 102. Examples of operating system 132 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 134 may facilitate display, execution, interaction, manipulation, or operation of program components through textual or graphical facilities. For example, user interfaces may provide computer interaction interface elements on a display system operatively connected to computer system 102, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 102 may implement web browser 136 stored program component. Web browser 136 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 102 may implement mail server 138 stored program component. Mail server 138 may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, computer system 102 may implement mail client 140 stored program component. Mail client 140 may be a mail viewing application, such as Apple Mail, Microsoft Entourage, Microsoft Outlook, Mozilla Thunderbird, etc.

In some embodiments, computer system 102 may store user/application data 142, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

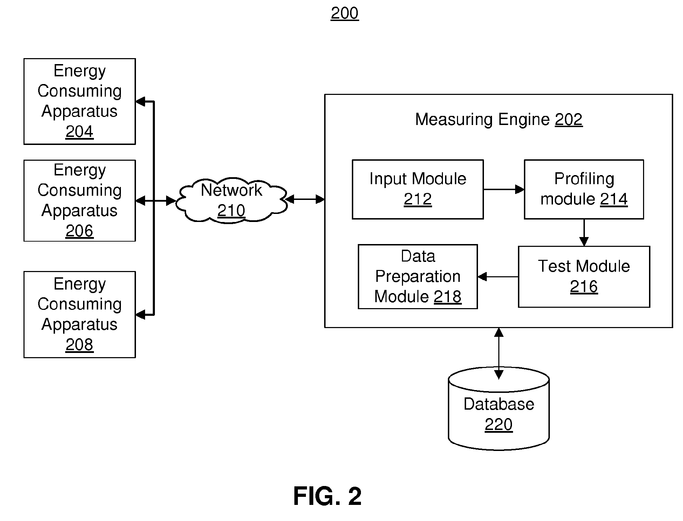

FIG. 2 is a block diagram illustrating a system 200 for monitoring energy consumption of energy consuming apparatuses, in accordance with an embodiment. System 200 includes an monitoring engine 202 that communicates with a plurality of energy consuming apparatuses (for example, an energy consuming apparatus 204, an energy consuming apparatus 206, and an energy consuming apparatus 208). Examples of the plurality of energy consuming apparatuses may include, but are not limited to Heating Ventilation and Air-Conditioning (HVAC) units of different types, electrical systems, like, power conditioning and supply systems, transformers, energy generation sources, like, generators with different fuel sources including cogeneration plants and solar plants, lighting units, smart devices, sensors and meters. The plurality of energy consuming apparatuses may be placed at different locations within the same facility of a single organization. Alternatively, each of the plurality of energy consuming apparatuses may be located at distributed facilities of the same or multiple organizations, such that the distributed facilities are located at different geographical locations. Each of these different geographical locations may also have diverse climatic conditions. The communication between measuring engine 202 and the plurality of energy consuming apparatuses is facilitated through a network 210. Network 210 may be a wired or a wireless network. Examples of network 210 may include, but are not limited to Local Area Network (LAN), Metropolitan Area Network (MAN), Wide Area Network (WAN) or the Internet.

Measuring engine 202 may collect energy consumption data from the plurality of energy consuming apparatuses. The term "energy consumption data" preferably includes data associated with physical parameters relating to energy consumption of the energy consuming apparatus during operation. Alternatively, each of the plurality of energy consuming apparatuses may be programmed to periodically provide energy consumption data to monitoring engine 202. In an embodiment, an energy consuming apparatus may be programmed to communicate energy consumption data to monitoring engine 202, when one or more energy parameters for the energy consuming apparatus breach an associated threshold. For example, in a roof-top AC unit, when temperature of the compressor rises above a threshold temperature, it may communicate multiple parameter readings that affect the rise in temperature to monitoring engine 202. Energy consumption data associated with an energy consuming apparatus may include, but is not limited to temperature of the energy consuming apparatus, pressure associated with the energy consuming apparatus, flow associated with the energy consuming apparatus, power associated with the energy consuming apparatus, run-hours of the energy consuming apparatus, utilization level of the energy consuming apparatus, damper states of the energy consuming apparatus, operating speeds of the energy consuming apparatus, operation state of the energy consuming apparatus, humidity levels of the energy consuming apparatus, consumption of the energy consuming apparatus, and calibration errors in measuring devices.

Monitoring engine 202 further includes an input module 212, a profiling module 214, a test module 216, and a data preparation module 218. Monitoring engine 202 also communicates with a database 220. In an embodiment, database 220 may be located within monitoring engine 202. Energy consumption data collected from the plurality of energy consuming apparatuses is received by input module 212, which then filters the energy consumption data based on constraints to generate filtered energy consumption data. Examples of the constraints that are used to filter the energy consumption data may include, but are not limited to one or more of inactive energy consuming apparatuses, failed energy consuming apparatuses, and energy consuming apparatuses with missing data. In this way, filtering the energy consumption data discards defective energy consumption data to obtain valid energy consumption data.

Using the filtered energy consumption data, input module 212 determines the impacting variables and the energy consumption variables. In an embodiment, the impacting variables are independent variables and may include, but are not limited to business policy, outside air temperature, location area and operation pattern of the facility (helps in determining facility characteristics like climate and period of energy usages by different energy consuming apparatuses), and control parameters. Control parameters, for example, may include, but are not limited to Original Equipment Manufacturer (OEM) specified adjustable configuration parameters in energy consuming apparatuses or energy consuming apparatus groups and customer specified ranges (for example, policy set-point range).

The impacting variables are of two types, i.e., normalizing variables and profiling variables. The term "normalizing variables" preferably includes environmental conditions that could affect the performance of the energy consuming apparatus. Normalizing variables, for example, may include, but are not limited to outside air temperature, outside air humidity, outside air dewpoint, age of an energy consuming apparatus, area served, available capacity of an energy consuming apparatus group, Zone temperature maintained by an energy consuming apparatus group. The term "profiling variables" preferably includes operating conditions and/or scenarios that could affect the performance of the energy consuming apparatus. Further, the profiling variables, for example, may include but are not limited to type of operations, facility type, day of the week (weekend or weekday), climate zones, and energy consuming apparatus make. The type of operations may include different operation patterns for a retail facility, for example, store close hours, employee hours, and business hours.

Similarly, the energy consumption variables are also of two types. These variables may be commonly measured performance parameters that may already be known. Examples may include, but are not limited to supply temperature for an energy consuming apparatus, supply static pressure for an energy consuming apparatus, refrigerant pressure for an energy consuming apparatus, and zone temperature for an energy consuming apparatus or an energy consuming apparatus group. Alternatively, these variables may be derived parameters and the examples may include, but are not limited to run-hours of an energy consuming apparatus or an energy consuming apparatus group, consumption of an energy consuming apparatus or an energy consuming apparatus groups, set-points maintained, and temperature difference across input and output of an energy consuming apparatus. In an embodiment, a set of energy consumption variables may act as impacting variables for another set of energy consumption variables.

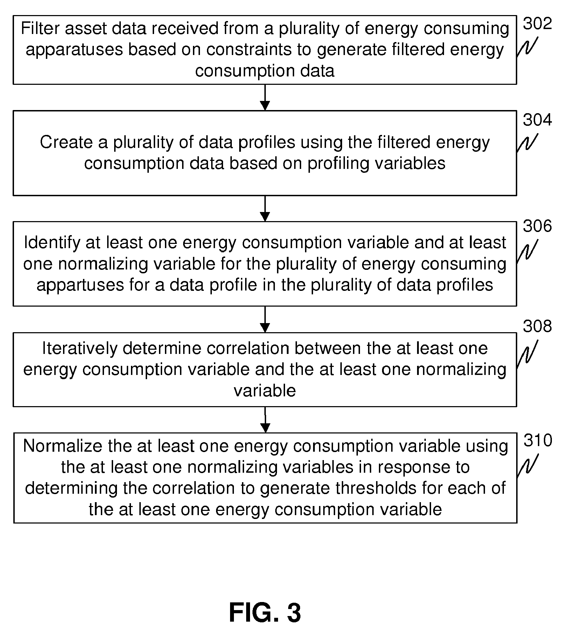

The energy consumption data that is received by input module 212 may be structured or unstructured. Input module 212 transforms this energy consumption data into derived variables, input materiality, thresholds, and other configuration parameters. Further, if the energy consumption data includes some known errors, input module 212 may further clean these errors or substitute missing values. The information extracted and derived by input module 212 is used by profiling module 214 to create a plurality of data profiles using the filtered energy consumption data based on profiling variables. Input module 212 identifies data profiles in which monitoring is required. Thereafter, profiling module 214 uses energy consumption variables and impacting variables derived by input module 212 to monitor the performance of each of the plurality of energy consuming apparatuses for these data profiles. This is further explained in detail in conjunction with an example described in FIG. 3.

Test module 216 tests the materiality of impact that an impacting variable has on an energy consumption variable. In an embodiment, test module 216 may test the materiality of impact of a set of impacting variables on an energy consumption variable. Thereafter, data preparation module 218 determines normalization coefficients of normalization variables for energy consumption variables. An energy consumption variable may be used as a reference for assessing the performance of energy consuming apparatuses. The energy consumption variables may be determined from the energy profile of an energy consuming apparatus. The term "energy consumption variables" preferably includes physical parameters associated with performance of the energy consuming apparatus during operation. By normalizing the energy consuming variables, performance of energy consuming apparatuses can be assessed regardless of the current environmental conditions. For example, a normalization coefficient may be determined by comparing an energy consumption variable with a normalization variable. The normalization coefficient may then be used to determine the impact of a normalizing variable on a benchmark variable for an energy consuming apparatus at different locations. In other words, data preparation module 218 applies normalization coefficient to get normalized energy consumption variable data under a particular profile within limits of normalization variable. Data preparation module 218 thus monitors performance, using energy consumption variables, across multiple sites for one or more energy consuming apparatuses or one or more energy consuming apparatus groups.

FIG. 3 illustrates a flowchart of a method for monitoring energy consumption of energy consuming apparatuses, in accordance with an embodiment. To this end, energy consumption data is collected from a plurality of energy consuming apparatuses. The plurality of energy consuming apparatuses may be distributed across multiple geographical locations. Energy consumption data for an energy consuming apparatus, for example, may include, but is not limited to temperature of the energy consuming apparatus, pressure associated with the energy consuming apparatus, flow associated with the energy consuming apparatus, power associated with the energy consuming apparatus, run-hours of the energy consuming apparatus, utilization level of the energy consuming apparatus, damper states of the energy consuming apparatus, operating speeds of the energy consuming apparatus, operation state of the energy consuming apparatus, humidity levels of the energy consuming apparatus, and consumption of the energy consuming apparatus.

Thereafter, at 302 the energy consumption data received from the plurality of energy consuming apparatuses is filtered based on constraints to generate filtered energy consumption data. Examples of a constraint may include, but are not limited to one or more of inactive energy consuming apparatuses, failed energy consuming apparatuses, and energy consuming apparatuses with missing data. The filtered energy consumption data is then used at 304 to create a plurality of data profiles based on profiling variables. The profiling variables may include, but are not limited to type of operations, facility type, day of the week (weekends, weekday, or national holidays), climate zones, and energy consuming apparatus make. For example, for a particular retail chain, there may be a separate data profile for certain special event days (for example, Black Friday) and a separate data profile for weekends and separate data profile for weekdays in the year. The reason being that, on those special event days the number of footfalls in the shopping mart would be much higher throughout the day, when compared to that on a weekend or other weekdays. Thus, the HVAC units would have to run on a much higher capacity on those special event days, as compared to that on other days.

At 306, for one of the data profiles, one or more energy consumption variables and one or more normalizing variables are identified for the plurality of energy consuming apparatuses. In other words, firstly a data profile is selected and for that particular data profile energy consumption variables and normalizing variables are identified. Energy consumption variables, for example, may include run-hours of an energy consuming apparatus or energy consuming apparatus group, supply temperature for an energy consuming apparatus, supply static pressure for an energy consuming apparatus, refrigerant pressure for an energy consuming apparatus, and zone temperature for an energy consuming apparatus or an energy consuming apparatus group. These energy consumption variables are normalized based on the normalizing variables, which for example, may include, but are not limited to outside air temperature, outside air humidity, outside air dewpoint, age of an energy consuming apparatus, area served, zone temperature maintained, and available capacity of an energy consuming apparatus group. For example run-hours of an HVAC apparatus or an energy consuming apparatus group should ideally vary for different geographical locations and zone temperature achieved by the energy consuming apparatuses. Thus run-hours would be normalized based on outside air temperature and the zone temperature maintained. As a result, measuring run-hours would increase or decrease based on average outside temperature as well as temperature maintained.

Thereafter, at 308, correlation between the one or more energy consumption variables and the one or more normalizing variables that are identified at 306 is iteratively determined. In other words, the impact of the one or more normalization variables on performance of an energy consumption variable is iteratively determined in order to identify those normalizing variables that really have an impact on performance of the energy consumption variable in real practice. The reason for doing so is that a normalizing variable may be assumed to have a significant impact on performance of a energy consumption variable. However, in real practice, this might not be true. Moreover, other normalizing variables, individually or in combination thereof, may also have a significant impact on performance of the energy consumption variable.

Moreover, while determining the correlation, one or more normalization coefficient associated with the one or more normalizing variable are also determined for each of the one or more energy consumption variables. A normalization coefficient helps in establishing a relationship between a normalizing variable and an energy consumption variable, such that, the normalizing variable is able to effectively normalize the energy consumption variable data for a particular data profile. Only when materiality criteria set by test module 216 for normalizing variables is met, these normalizing variables are adopted for future analysis.

Once the normalizing variables have been identified and normalization coefficient have been arrived at, the one or more energy consumption variables are normalized using the one or more normalizing variables to generate threshold for each of the one or more energy consumption variables at 310. To this end, a normalization coefficient is applied to an associated energy consumption variable to generate normalized energy consumption data.

As an example of the method described above, monitoring of run-hours of a roof top AC unit compressor is discussed. In this example, the energy consumption variable is run-hours, profiling variable is operation hours, and the normalizing variable is Outside Air Temperature (OAT). The climate zone is represented as 3A and run-hours is computed using equation 1 given below:

$$F\ (OP_{hrs},\ OAT) = \text{Run-hours (AH)} + \text{Run-hours (PH)} + \text{Run-hours ( NH)} \tag{1}$$

where,

$F\ (OP_{hrs},\ OAT)$ = Total run-hours being a function of operation hours ($OP_{hrs}$) and OAT;
AH = Afterhours;
PH = Partial hours;
NH = Normal hours, each of AH, PH, and NM being different data profiles for
types of operation hours

The total run-hours, in this example, may further be represented by equations 2, 3, 4, and 5 given below:

$$f\ (T_{AH,3A}) * H_{AH,3A} + f\ (T_{PH,3A}) * H_{PH,3A} + f\ (T_{NH,3A}) * H_{NH,3A} \dots\dots \tag{2}$$

$$f\ (T_{AH,3A}) = (a0_{,ah,3A} + a1_{AH,3A}*T + a2_{AH,3A}*T^{\wedge 2}) \dots\dots \tag{3}$$

$$f\ (T_{PH,3A}) = (a0_{PH,3A} + a1_{PH,3A}*T + a2_{PH,3A}*T^{\wedge 2}) \dots\dots \tag{4}$$

$$f\ (T_{NH,3A}) = (a0_{NH,3A} + a1_{NH,3A}*T + a2_{NH,3A}*T^{\wedge 2}) \dots\dots \tag{5}$$

where,

$T$ is a variable representing OAT;
$H$ is a variable representing number of hours in operation; and
a0, a1 and a2 are normalizing coefficients respective to the climate zone 3A and operation profile.

Thus, for the climate zone 3A, using the equations 2, 3, 4, and 5, energy consumption values for the run-hours of a roof top AC unit compressor may be computed. Similarly, for other climate zones (which will decide the normalizing variables), a normalized energy consumption value for the run-hours of a roof top AC unit compressor may be computed.

After thresholds for each of the one or more energy consumption variables have been generated, threshold values for each energy consuming apparatus along with the minimum, maximum and mean values is presented. These values may either be represented in text form, league tables, or visually with options to view the threshold values in conjunction with one or more normalizing or profiling variables.

The method described above looks at performance of all operating parameters (for example, run-hours, utilization level, damper states, operating speeds, and humidity levels) and profiles them as per various data profiles. When this method is carried out across the energy consuming apparatuses, energy consuming apparatus groups, sites across multiple organizations, it enables us in determining the thresholds. As a result, the need for establishing very elaborate monitoring methodologies is eliminated. The advantages of the methods are that performance outliers or abnormal operating conditions are effectively determined and energy consuming apparatus failures are proactively identified.

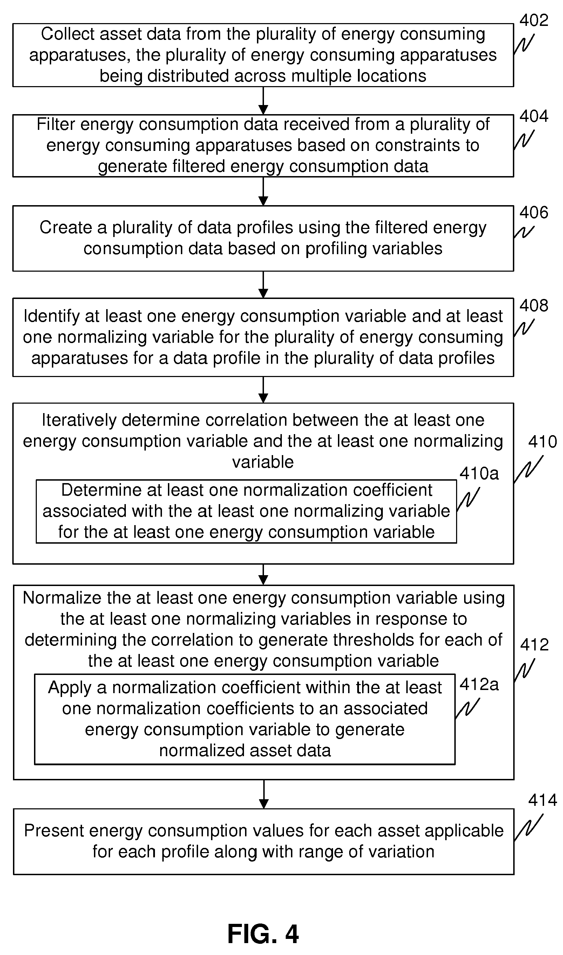

FIG. 4 illustrates a flowchart of a method for monitoring energy consuming apparatuses, in accordance with another embodiment. At 402, energy consumption data is collected from a plurality of energy consuming apparatuses. The plurality of energy consuming apparatuses may be distributed across multiple geographical locations. Energy consumption data for an energy consuming apparatus, for example, may include, but is not limited to temperature of the energy consuming apparatus, pressure associated with the energy consuming apparatus, flow associated with the energy consuming apparatus, power associated with the energy consuming apparatus, run-hours of the energy consuming apparatus, utilization level of the energy consuming apparatus, damper states of the energy consuming apparatus, operating speeds of the energy consuming apparatus, operation state of the energy consuming apparatus, humidity levels of the energy consuming apparatus, and consumption of the energy consuming apparatus.

The energy consumption data received from the plurality of energy consuming apparatuses is filtered based on constraints to generate filtered energy consumption data at 404. This filtered energy consumption data is then used to create a plurality of data profiles based on profiling variables at 406. Thereafter, at 408, one or more energy consumption variables and one or more normalizing variables are identified for the plurality of energy consuming apparatuses for a data profile in the plurality of data profiles. A correlation between the one or more energy consumption variable and the one or more normalizing variables is then iteratively determined at 410. While determining the correlation, at 410a, one or more normalization coefficient associated with the one or more normalizing variable are also determined for each of the one or more energy consumption variables. This has been explained in detail in conjunction with FIG. 3.

Thereafter, at 412, the one or more energy consumption variables are normalized using the one or more normalizing variables in response to determining the correlation to generate thresholds for each of the one or more energy consumption variables. To generate normalized energy consumption data, a normalization coefficient within the one or more normalization coefficients is applied to an associated energy consumption variable at 412a. The threshold values for each energy consuming apparatus applicable for each profile along with range of variation are then presented at 414. The threshold values for each energy consuming apparatus may be presented along with their minimum, maximum and mean values. This has been explained in detail in conjunction with FIG. 3.

Various embodiments of the invention provide methods and system for monitoring energy consumption of energy consuming apparatuses across distributed facilities. The monitoring looks at performance of all the operating parameters (for example, run-hours, utilization level, damper states, operating speeds, and humidity levels) and profiles them as per various data profiles. When this method is carried out across the energy consuming apparatuses, energy consuming apparatus groups, sites across multiple organizations, it enables us in determining the benchmarks. As a result, the need for establishing very elaborate monitoring methodologies is eliminated. The advantages of the methods are that performance outliers or abnormal operating conditions are effectively determined and energy consuming apparatus failures are proactively identified.

The specification has described methods and system for monitoring energy consumption of energy consuming apparatuses across distributed facilities. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A computer-implemented method of monitoring energy consumption of a plurality of energy consuming apparatuses, the method comprising:

   filtering energy consumption data received from a plurality of energy consuming apparatuses based on constraints to generate filtered energy consumption data;
   creating a plurality of data profiles using the filtered energy consumption data based on profiling variables;
   identifying at least one energy consumption variable and at least one normalizing variable for the plurality of energy consuming apparatuses for a data profile in the plurality of data profiles;
   iteratively determining correlation between the at least one energy consumption variable and the at least one normalizing variable; and
   normalizing the at least one energy consumption variable using the at least one normalizing variables in response to determining the correlation to generate an energy consumption threshold for each of the at least one energy consumption variable.

2. The method of claim 1, wherein iteratively determining correlation comprises determining at least one normalization coefficient associated with the at least one normalizing variable for the at least one energy consumption variable.

3. The method of claim 2, wherein normalizing comprises applying a normalization coefficient within the at least one normalization coefficients to an associated energy consumption variable to generate normalized energy consumption data.

4. The method of any preceding claim further comprising presenting energy consumption thresholds for each energy consuming apparatus along with the minimum, maximum and mean energy consumption values.

5. The method of any preceding claim further comprising collecting energy consumption data from the plurality of energy consuming apparatuses, the plurality of energy consuming apparatuses being distributed across multiple locations.

6. The method of any preceding claim, wherein energy consumption data for an energy consuming apparatus is selected from a group comprising temperature of the energy consuming apparatus, pressure associated with the energy consuming apparatus, flow associated with the energy consuming apparatus, power associated with the energy consuming apparatus, run-hours of the energy consuming apparatus, utilization level of the energy consuming apparatus, damper states of the energy consuming apparatus, operating speeds of the energy consuming apparatus, operation state of the energy consuming apparatus, humidity levels of the energy consuming apparatus, consumption of the energy consuming apparatus.

7. The method of any preceding claim, wherein the at least one profiling variable is selected from a group comprising type of operations, facility type, day of the week, climate zones, and energy consuming apparatus make.

8. The method of any preceding claim, wherein the at least one energy consumption variable is selected from a group comprising zone temperature for an energy consuming apparatus or an energy consuming apparatus group, supply temperature for an energy consuming apparatus, supply static pressure for an energy consuming apparatus, refrigerant pressure for an energy consuming apparatus, run-hours for an energy consuming apparatus, temperature difference across energy consuming apparatus input/output, consumption of an energy consuming apparatus or an energy consuming apparatus group, and setpoints maintained.

9. The method of any preceding claim, wherein the at least one normalizing variable is selected from a group comprising outside air temperature, outside air humidity, outside air dewpoint, age of an energy consuming apparatus, area served, available capacity of the group, and zone temperature maintained by the group.

10. The method of any preceding claim, wherein constraints to filter the energy consumption data comprises at least one of failed energy consuming apparatus and energy consuming apparatus with missing data.

11. A system for monitoring energy consumption of an energy consuming apparatus, the system comprising:

at least one processors; and
a computer-readable medium storing instructions that, when executed by the at least one processor, cause the at least one processor to perform the method of any preceding claim.

12. A non-transitory computer-readable storage medium for monitoring energy consumption of energy consuming apparatus, when executed by a computing device, cause the computing device to perform the method of any one of claims 1 to 10.

Input device(s) (e.g., keyboard, mouse, etc.) 108

Output device(s) (e.g., display, printer, etc.) 110

I/O Interface 106

Tx/Rx (e.g., cellular, GPS, etc.) 112

Processor 104

Network Interface 116

Communication Network (e.g., WAN, LAN, Internet, etc.) 114

Device(s) 118

Device 120

Device(s) 122

Storage Interface 124

RAM 126

ROM 128

Memory devices 130

User/Application Data 142

Mail Client 140

Mail Server 138

Web Browser 136

User Interface 134

Operating System 132

Computer System 102

FIG. 1

200

| Energy Consuming Apparatus 204 |

| Energy Consuming Apparatus 206 |

Network 210

| Energy Consuming Apparatus 208 |

Measuring Engine 202

| Input Module 212 | → | Profiling module 214 |

| Data Preparation Module 218 | ← | Test Module 216 |

Database 220

**FIG. 2**

| | |
|---|---|
| Filter asset data received from a plurality of energy consuming apparatuses based on constraints to generate filtered energy consumption data | 302 |
| Create a plurality of data profiles using the filtered energy consumption data based on profiling variables | 304 |
| Identify at least one energy consumption variable and at least one normalizing variable for the plurality of energy consuming appartuses for a data profile in the plurality of data profiles | 306 |
| Iteratively determine correlation between the at least one energy consumption variable and the at least one normalizing variable | 308 |
| Normalize the at least one energy consumption variable using the at least one normalizing variables in response to determining the correlation to generate thresholds for each of the at least one energy consumption variable | 310 |

# FIG. 3

Collect asset data from the plurality of energy consuming apparatuses, the plurality of energy consuming apparatuses being distributed across multiple locations

402

Filter energy consumption data received from a plurality of energy consuming apparatuses based on constraints to generate filtered energy consumption data

404

Create a plurality of data profiles using the filtered energy consumption data based on profiling variables

406

Identify at least one energy consumption variable and at least one normalizing variable for the plurality of energy consuming apparatuses for a data profile in the plurality of data profiles

408

Iteratively determine correlation between the at least one energy consumption variable and the at least one normalizing variable

410

Determine at least one normalization coefficient associated with the at least one normalizing variable for the at least one energy consumption variable

410a

Normalize the at least one energy consumption variable using the at least one normalizing variables in response to determining the correlation to generate thresholds for each of the at least one energy consumption variable

412

Apply a normalization coefficient within the at least one normalization coefficients to an associated energy consumption variable to generate normalized asset data

412a

Present energy consumption values for each asset applicable for each profile along with range of variation

414

FIG. 4

Europäisches
Patentamt
European
Patent Office
Office européen
des brevets

## EUROPEAN SEARCH REPORT

Application Number

EP 16 16 0236

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chris Williams: "How to Normalize Energy Consumption For Weather Influences Using RETScreen  Plus - HeatSpring Magazine", , 19 June 2014 (2014-06-19), XP055272032, Retrieved from the Internet: URL:https://blog.heatspring.com/free-retsc reen-tutorial/ [retrieved on 2016-05-11] * the whole document * | 1-12 | INV. G06Q50/06 |
| X | John Avina:  "An Energy Manager's Intro to Weather Normalization of Utility Bills", , 12 July 2011 (2011-07-12), XP055272121, Retrieved from the Internet: URL:http://www.abraxasenergy.com/articles/ intro-weather-normalization/ [retrieved on 2016-05-12] * the whole document * | 1-12 | |
| X | US 2014/058572 A1 (STEIN ADAM R [US] ET AL) 27 February 2014 (2014-02-27) * paragraphs [0002] - [0008], [0136], [0262], [0267] * | 1-12 | TECHNICAL FIELDS SEARCHED (IPC) G06Q |
| X | WO 03/084022 A1 (ROBERTSHAW CONTROLS CO [US]; TURNER JAMES H [US]; PEACHEY DAVID [US];) 9 October 2003 (2003-10-09) * paragraphs [0292] - [0294], [0302] - [0304] * | 1-12 | |
| X | US 2015/120073 A1 (GHOSH SUDIPTA [IN] ET AL) 30 April 2015 (2015-04-30) * figure 5 * | 1-12 | |

-/--

The present search report has been drawn up for all claims

| Place of search | Date of completion of the search | Examiner |
|---|---|---|
| Munich | 12 May 2016 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 16 0236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAHMOUD A.T. ELKHAFIF: "An iterative approach for weather-correcting energy consumption data", ENERGY ECONOMICS, vol. 18, no. 3, 1 July 1996 (1996-07-01), pages 221-230, XP055272105, AMSTERDAM, NL ISSN: 0140-9883, DOI: 10.1016/0140-9883(96)00010-2 * the whole document * ----- | 1-12 | |

TECHNICAL FIELDS SEARCHED (IPC)

The present search report has been drawn up for all claims

| Place of search | Date of completion of the search | Examiner |
|---|---|---|
| Munich | 12 May 2016 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 0236

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2016

| Patent document cited in search report | | | Publication date | Patent family member(s) | | | Publication date |
|---|---|---|---|---|---|---|---|
| US 2014058572 | A1 | | 27-02-2014 | US | 2014058572 | A1 | 27-02-2014 |
| | | | | WO | 2014035544 | A1 | 06-03-2014 |
| WO 03084022 | A1 | | 09-10-2003 | AU | 2003218484 | A1 | 13-10-2003 |
| | | | | BR | 0308702 | A | 09-02-2005 |
| | | | | CA | 2480551 | A1 | 09-10-2003 |
| | | | | CN | 1656661 | A | 17-08-2005 |
| | | | | EP | 1490941 | A1 | 29-12-2004 |
| | | | | JP | 2005522164 | A | 21-07-2005 |
| | | | | KR | 20040108694 | A | 24-12-2004 |
| | | | | NZ | 535509 | A | 31-03-2006 |
| | | | | US | 2004117330 | A1 | 17-06-2004 |
| | | | | US | 2004133314 | A1 | 08-07-2004 |
| | | | | US | 2004138981 | A1 | 15-07-2004 |
| | | | | US | 2004139038 | A1 | 15-07-2004 |
| | | | | US | 2005033707 | A1 | 10-02-2005 |
| | | | | US | 2007043477 | A1 | 22-02-2007 |
| | | | | US | 2009157529 | A1 | 18-06-2009 |
| | | | | WO | 03084022 | A1 | 09-10-2003 |
| US 2015120073 | A1 | | 30-04-2015 | NONE | | | |

EPO FORM P0459

For more details about this annex : see Official Journal of the European Patent Office, No. 12/82